# EUROPEAN PATENT APPLICATION

(11) **EP 4 601 092 A1**
(43) Date of publication of application: **13.08.2025**
(21) Application number: 24875784.1
(22) Date of filing: 30.09.2024
(51) Int. Cl.: H01M 50/244, H01M 50/264, H01M 50/107

(54) **CYLINDRICAL BATTERY FIXING DEVICE HAVING ENHANCED ATTACHMENT/DETACHMENT FUNCTION**

(30) Priority: 12.12.2023 KR 20230180142
(71) Applicant: LG Energy Solution Ltd., 07335 Seoul (KR)
(72) Inventor: KIM, Seong Kyu, Daejeon 34122 (KR)
(74) Representative: Goddar, Heinz J.
(86) International application number: PCT/KR2024/014892
(87) International publication number: WO 2025/127345

(57) **Abstract**

Disclosed is a cylindrical battery fixing apparatus including a lower housing formed in the shape of a flat plate, the lower housing having a through-hole configured to allow a cylindrical battery to be vertically inserted therethrough, an upper housing fixed to the top of the lower housing, the upper housing being generally formed in the shape of a column or a triangular prism, the upper housing being provided in a lower end thereof with guide recesses disposed at 120 degree intervals, and three fixing units inserted into the guide recesses of the upper housing, respectively, the fixing units being movable along an upper surface of the lower housing in a direction toward the center of the lower housing, each of the fixing units being provided on a front surface thereof with a fixing jaw configured to be inserted into and fixed to a beading portion of the cylindrical battery, wherein a fixing block is coupled to a rear surface of each of the fixing units, and two or more compression springs are provided between a respective fixing block and the upper housing.

## Description

### [Technical Field]

This application claims the benefit of priority to Korean Patent Application No. 2023-0180142 filed on December 12, 2023, the disclosure of which is incorporated herein by reference in its entirety.

The present invention relates to a cylindrical battery fixing apparatus with an improved detachment function. More particularly, the present invention relates to a cylindrical battery fixing apparatus with an improved detachment function capable of smoothly discharging a cylindrical battery that has been manufactured or machined after the cylindrical battery is fixed to the cylindrical battery fixing apparatus for manufacturing or machining.

### [Background Art]

Depending on the shape of a battery case, secondary batteries are classified into a cylindrical battery having an electrode assembly received in a cylindrical metal can, a prismatic battery having an electrode assembly received in a prismatic metal can, and a pouch-shaped battery having an electrode assembly received in a pouch-shaped case made of an aluminum laminate sheet.

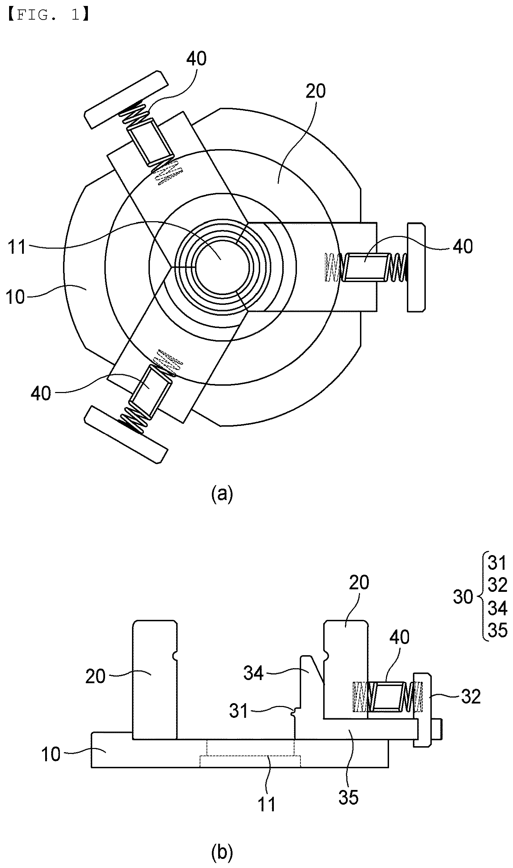

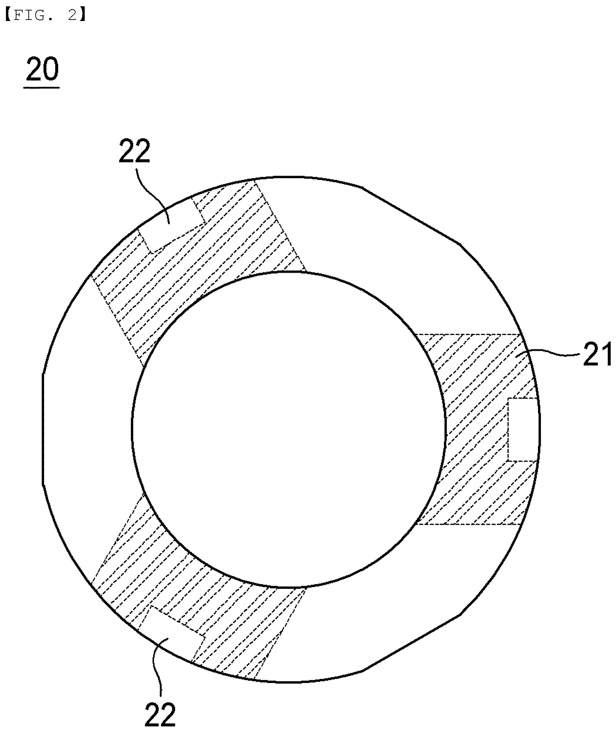

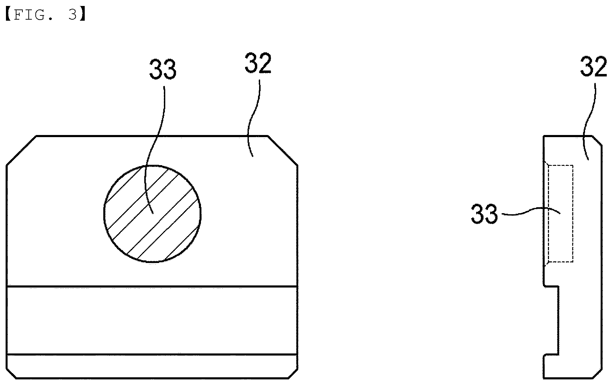

FIG. 1 is a schematic view of a conventional cylindrical battery fixing apparatus, FIG. 2 is a sectional view of a lower housing of the conventional cylindrical battery fixing apparatus, and FIG. 3 is a schematic view of a fixing block of the conventional cylindrical battery fixing apparatus.

The cylindrical battery fixing apparatus shown in FIGs. 1 to 3 is an apparatus for fixing a cylindrical battery in order to perform a crimping process. The cylindrical battery fixing apparatus includes a lower housing 10 having a through-hole 11 through which a cylindrical battery extends, an upper housing 20 fixed to the top of the lower housing 10, the upper housing having guide recesses 21 and housing fixing portions 22 formed at 120 degree intervals, a fixing unit 30 configured to fix the cylindrical battery, and a total of three compression springs 40 located between a fixing block 32 provided at a rear surface of the fixing unit 30 and the upper housing 20.

In the conventional cylindrical battery fixing apparatus, in the state in which a fixing jaw 31 of the fixing unit 30 is in tight contact with the cylindrical battery to fix the cylindrical battery, a crimping pressing portion is moved downward from above to press the cylindrical battery such that a crimping portion is formed at the cylindrical battery. After the crimping process, the fixing unit 30 is moved back, at which time one-sided eccentricity may occur due to the presence of one compression spring 40.

The fixing unit 30 is moved forward in a direction toward the center of the cylindrical battery or is moved backward in a direction away from the center of the cylindrical battery by one compression spring 40. When the fixing unit 30 is moved rearward, the fixing unit 30 must be bounced back by elasticity of the compression spring 40, but the fixing unit may be caught in the middle due to eccentricity.

Patent Document 1 discloses an apparatus for producing a cylindrical secondary battery cell, the apparatus including a fixing member configured to press and fix an inner recess of a battery can and a second moving portion configured to move the fixing member, the second moving portion being constituted by a hydraulic pump or a motor, but does not disclose any configuration for improving a detachment function.

Patent Document 2 discloses a crimping apparatus for lithium batteries, the crimping apparatus including a crimping portion configured to press a cylindrical lithium battery using a plurality of springs in order to form a crimped portion at the cylindrical lithium battery, which is different from a configuration for pressing, supporting, and fixing a beading portion.

Patent Documents 3 and 4 also do not disclose a fixing jaw and do not disclose any configuration for improving a detachment function related thereto.

### (Prior Art Documents)

Korean Patent Application Publication No. 2023-0131764 ("Patent Document 1")
Korean Patent Application Publication No. 1998-0078956 ("Patent Document 2")
Chinese Patent Application Publication No. 115472891 ("Patent Document 3")
Chinese Utility Model Publication No. 218524843 ("Patent Document 4")

### [Disclosure]

### [Technical Problem]

The present invention has been made in view of the above problems, and it is an object of the present invention to provide a cylindrical battery fixing apparatus with an improved detachment function capable of preventing the occurrence of eccentricity of a fixing unit when fixing and releasing a cylindrical battery.

It is another object of the present invention to provide a cylindrical battery fixing apparatus with an improved detachment function capable of preventing a phenomenon that the fixing unit is caught by peripheral parts due to eccentricity when the fixing unit is moved forward and rearward.

### [Technical Solution]

In order to accomplish the above objects, the present invention provides a cylindrical battery fixing apparatus including a lower housing (100) formed in a shape of a flat plate, the lower housing having a through-hole (110) configured to allow a cylindrical battery to be vertically inserted therethrough, an upper housing (200) fixed to the top of the lower housing (100), the upper housing being generally formed in a shape of a column or a triangular prism, the upper housing being provided in a lower end thereof with guide recesses (210) disposed at 120 degree intervals, and three fixing units (300) inserted into the guide recesses (210) of the upper housing (200), respectively, the fixing units being movable along an upper surface of the lower housing (100) in a direction toward the center of the lower housing (100), each of the fixing units being provided on a front surface thereof with a fixing jaw (310) configured to be inserted into and fixed to a beading portion of the cylindrical battery, wherein a fixing block (320) is coupled to a rear surface of each of the fixing units (300), and two or more compression springs (400) are provided between a respective fixing block (320) and the upper housing (200).

The two or more compression springs (400) may be disposed symmetrically with respect to the central axis of the guide recess (210).

One end of each distal end portion of the compression spring (400) may be fixed to a housing fixing portion (220) of the upper housing (200), and the other end of each distal end portion of the compression spring may be fixed to a distal end fixing portion (325) of the fixing block (320).

The two or more compression springs (400) may be provided at the fixing block (320) and the upper housing (200) at the same horizontal height.

The fixing units (300) may include a front end portion (340) formed in a concave shape, the front end portion being provided toward the center of the cylindrical battery fixing apparatus with the fixing jaw

(310) protruding forward, a central portion (350) connected to a lower end of the front end portion (340), the central portion being generally formed in a hexahedral shape, the central portion extending through the guide recess (210), and the fixing block (320) coupled to the central portion (350).

The length of the guide recess (210) may be equal to or greater than 1/2 of the length of the central portion (350).

When the fixing units are coupled so as to engage with each other, the fixing jaws (310) of the three fixing units (300) may form a circle.

The cylindrical battery fixing apparatus may include a synchronization unit (not shown) configured to enable the three fixing units to move simultaneously by the same displacement when the three fixing units (300) move along the upper surface of the lower housing (100) in the direction toward the center of the lower housing or in a direction away from the center of the lower housing.

The cylindrical battery (C) may be located through the through-hole (110) of the lower housing (100) such that a part of the cylindrical battery protrudes upwardly of the lower housing (100).

The guide recesses may be provided in the lower end of the upper housing at 90 degree or 75 degree intervals, and the fixing units may be provided in four or five.

In addition, the present invention may provide various combinations of the above solving means.

### [Advantageous Effects]

In a cylindrical battery fixing apparatus with an improved detachment function according to the present invention, a fixing unit is moved by two compression springs, whereby it is possible to prevent one-side eccentricity of the fixing unit.

In the cylindrical battery fixing apparatus with the improved detachment function according to the present invention, when the fixing unit is moved rearward by two compression springs, no eccentricity occurs even though the fixing unit is bounced back by elasticity of the compression springs, whereby it is possible to prevent a phenomenon of the fixing unit being caught by peripheral parts.

In the cylindrical battery fixing apparatus with the improved detachment function according to the present invention, the length of a guide recess is equal to or greater than 1/2 of the length of a central portion and thus the central portion is guided longer, whereby it is possible to prevent eccentricity.

### [Description of Drawings]

FIG. 1 is a schematic view of a conventional cylindrical battery fixing apparatus.
FIG. 2 is a sectional view of a lower housing of the conventional cylindrical battery fixing apparatus.
FIG. 3 is a schematic view of a fixing block of the conventional cylindrical battery fixing apparatus.
FIG. 4 is a schematic view of a cylindrical battery fixing apparatus according to an embodiment of the present invention.
FIG. 5 is a sectional view of a lower housing of the cylindrical battery fixing apparatus according to the embodiment of the present invention.
FIG. 6 is a schematic view of a fixing block of the cylindrical battery fixing apparatus according to the embodiment of the present invention.
FIG. 7 is a schematic view showing that a cylindrical battery is fixed using the cylindrical battery fixing apparatus according to the embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and is not limited to a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Hereinafter, a cylindrical battery fixing apparatus with an improved detachment function according to the present invention will be described in detail with reference to the accompanying drawings.

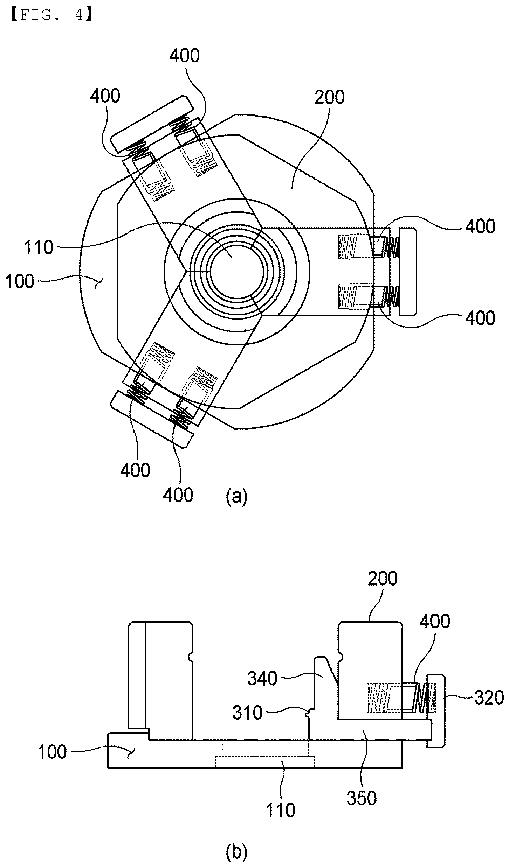

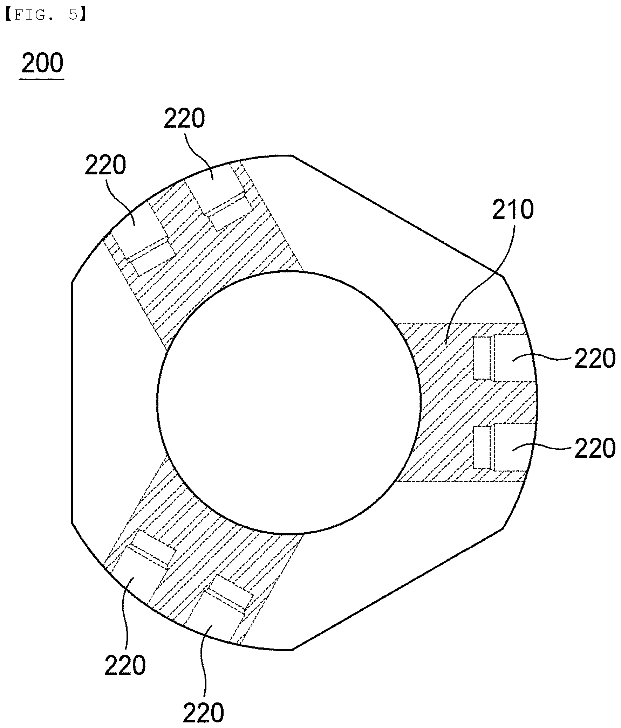

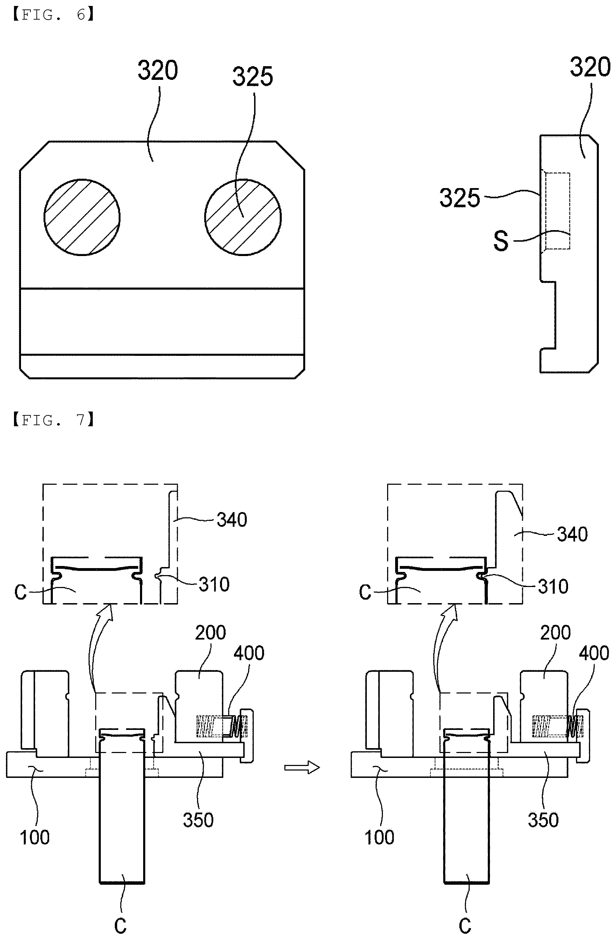

FIG. 4 is a schematic view of a cylindrical battery fixing apparatus according to an embodiment of the present invention, FIG. 5 is a sectional view of a lower housing of the cylindrical battery fixing apparatus according to the embodiment of the present invention, FIG. 6 is a schematic view of a fixing block of the cylindrical battery fixing apparatus according to the embodiment of the present invention, and FIG. 7 is a schematic view showing that a cylindrical battery is fixed using the cylindrical battery fixing apparatus according to the embodiment of the present invention.

As shown in FIGs. 4 to 7, the cylindrical battery fixing apparatus according to the present invention includes a lower housing 100, an upper housing 200, a fixing unit 300, and a compression spring 400.

The lower housing 100 is formed in the shape of a flat plate, is fixed, and is provided at a central part thereof with a through-hole 110 through which a cylindrical battery C may be disposed. When the cylindrical battery C is located through the through-hole 110 of the lower housing 100, a part of the cylindrical battery C protrudes upwardly of the lower housing 100.

The upper housing 200 is located above lower housing 100, is fixed, and is generally formed in the shape of a column or a triangular prism, wherein guide recesses 210 are provided in a lower end of the column or the triangular prism at 120 degree intervals. Two housing fixing portions 220 are provided in each of the guide recesses 210 of the upper housing 200, and a distal end of the compression spring 400 is fixed to each of the housing fixing portions 220.

The length of the guide recess 210 is equal to or greater than 1/2 of the length of a central portion 350, and thus the central portion 350 is guided longer, thereby preventing eccentricity of the fixing unit 300. In the conventional cylindrical battery fixing apparatus, the length of the guide recess 21 is equal to or less than 1/2 of the length of the central portion 35.

The fixing unit 300 is configured to fix the cylindrical battery C located through the through-hole 110 of the lower housing 100, and includes a fixing jaw 310, a fixing block 320, a front end portion 340, and a central portion 350.

The fixing unit 300 may be provided in three such that the fixing units are equally spaced apart with respect to the central axis of the cylindrical battery C, and a synchronization unit (not shown) may be provided such that the three fixing units can be simultaneously moved by the same displacement when the fixing units move along an upper surface of the lower housing 100 in a direction toward the center of the lower housing 100 or in a direction away from the center of the lower housing 100.

The synchronization unit (not shown) may be connected to the fixing units 300 by a bolt or a screw, and may be operated based on the same principle as the principle by which three chucks are simultaneously moved. Technology for simultaneously moving the fixing units 300 using the synchronization unit (not shown) is known in the field of machinery, and is already used in chucks of a lathe used for metal machining.

In addition, the three fixing units 300 may be disposed such that the angles between adjacent fixing units 300 are the same with respect to the central axis of the cylindrical battery C.

The fixing jaw 310 is concave, is in tight contact with the cylindrical battery C to fix the cylindrical battery C, and is shaped so as to be inserted into a beading portion of the cylindrical battery C.

The concave shape of the fixing jaw 310 has the same curvature as the shape of a side surface of the cylindrical battery C in tight contact therewith. When the fixing units 300 are moved forward in a direction toward the cylindrical battery C and engage with each other, the fixing jaws 310 of the three fixing units 300 form a circle.

When the fixing jaws 310 are located so as to engage with each other, the fixing jaws may have the same shape as the edge of the cylindrical battery C. In this case, fixing force may be highest. Even if the fixing jaws 310 do not have the same shape as the edge of the cylindrical battery C, the fixing jaws 310 are preferably located at the same angle and the same distance from the center axis of the cylindrical battery C when the fixing jaws are located so as to engage with each other.

The fixing block 320 may be located at the rear of the central portion 350 located on the upper surface of the lower housing 100 to support the compression spring 400, and may be flat.

The fixing block 320 may have a distal end fixing portion 325 recessed to a predetermined depth to prevent the compression spring 400 supported by the fixing block 320 from being supported at a position other than a designated position or from deviating from the designated position.

The front end portion 340 extends from the central portion 350 located on the upper surface of the lower housing 100 in a vertical direction, and has a fixed jaw 310 formed on a side surface thereof adjacent to the cylindrical battery C so as to protrude toward the cylindrical battery C.

The front end portion 340 extends from a distal end of the central portion 350 that is close to the cylindrical battery C in the vertical direction.

The central portion 350 is generally hexahedral in shape, is located on the upper surface of the lower housing 100 through the guide recess 210, and is connected to the fixing block 320 and the front end portion 340 in order to support the same.

Here, the length of the guide recess 210 is equal to or greater than 1/2 of the length of the central portion 350. When the length of the guide recess 210 is equal to or greater than 1/2 of the length of the central portion 350, the central portion 350 is guided longer, thereby preventing eccentricity.

Although the configuration for fixing the fixing block 320 and the central portion 350 is not specifically disclosed in FIG. 6, the fixing block 320 and the central portion 350 may be fixed and coupled, for example, by coupling using a bolt, coupling with a bolt and a nut, or coupling using a press-fit screw member, and a member and method capable of fixing and coupling the fixing block 320 and the central portion 350 are not particularly restricted.

The compression spring 400, which is an elastic spring, participates in the movement of the fixing unit 300, and distal ends of the compression spring are fixed, wherein one side of the compression spring is fixed to the distal end fixing portion 325 of the fixing block 320, and the other side of the compression spring is fixed to the housing fixing portion 220 of the upper housing 200, whereby deviation of the compression spring is prevented.

The compression springs 400 fixed to the fixing block 320 and the housing fixing portion 220 are provided so as to be located at the same horizontal height. This is because, if the compression springs have different positions, the pressure from the compression springs 400 is applied to different positions, causing eccentricity.

The compression springs 400 are disposed and fixed symmetrically with respect to the central axis of the guide recess 210 to prevent the occurrence of eccentricity.

A surface S of the distal end fixing portion 325 of the fixing block 320 to which the compression spring 400 is fixed, on which the compression spring 400 is seated, is symmetrically located at equally spaced distances with respect to the central axis of the fixing block 320 in the vertical direction, thereby preventing eccentricity of the compression spring 400.

The present invention may provide a cylindrical battery fixing apparatus with four or five fixing units 300, as needed, in which case four or five guide recesses 210 may be provided.

When the four guide recesses 210 are provided, the guide recesses 210 may be spaced apart from each other by 90 degrees, and when the five guide recesses 210 are provided, the guide recesses 210 may be spaced apart from each other by 75 degrees.

As an example, assuming that the number of guide recesses 210 is n, the guide recesses 210 are spaced apart from each other by 360/n degrees.

It is obvious that the fixing units 300 and the compression springs 400 are also spaced apart from each other at the same angle depending on the position of the guide recesses 210, respectively.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10, 100: Lower housings
11, 110: Through-holes
20, 200: Upper housings
21, 210: Guide recesses
22, 220: Housing fixing portions
30, 300: Fixing units
31, 310: Fixing jaws
32, 320: Fixing blocks
33, 325: Distal end fixing portions
40, 400: Compression springs
34, 340: Front end portions
35, 350: Central portions
C: Cylindrical battery
S: Surface where compression spring is seated

## Claims

1. A cylindrical battery fixing apparatus comprising:
a lower housing formed in a shape of a flat plate, the lower housing having a through-hole configured to allow a cylindrical battery to be vertically inserted therethrough;
an upper housing fixed to a top of the lower housing, the upper housing being generally formed in a shape of a column or a triangular prism, the upper housing being provided in a lower end thereof with guide recesses disposed at 120 degree intervals; and
three fixing units inserted into the guide recesses of the upper housing, respectively, the fixing units being movable along an upper surface of the lower housing in a direction toward a center of the lower housing, each of the fixing units being provided on a front surface thereof with a fixing jaw configured to be inserted into and fixed to a beading portion of the cylindrical battery, wherein
a fixing block is coupled to a rear surface of each of the fixing units, and
two or more compression springs are provided between a respective fixing block and the upper housing.

2. The cylindrical battery fixing apparatus according to claim 1, wherein the two or more compression springs are disposed symmetrically with respect to a central axis of the guide recess.

3. The cylindrical battery fixing apparatus according to claim 2, wherein
one end of each distal end portion of the compression spring is fixed to a housing fixing portion of the upper housing, and
the other end of each distal end portion of the compression spring is fixed to a distal end fixing portion of the fixing block.

4. The cylindrical battery fixing apparatus according to claim 2, wherein the two or more compression springs are provided at the fixing block and the upper housing at the same horizontal height.

5. The cylindrical battery fixing apparatus according to claim 1, wherein the fixing units include:
a front end portion formed in a concave shape, the front end portion being provided toward a center of the cylindrical battery fixing apparatus with the fixing jaw protruding forward;
a central portion connected to a lower end of the front end portion, the central portion being generally formed in a hexahedral shape, the central portion extending through the guide recess, and
the fixing block coupled to the central portion.

6. The cylindrical battery fixing apparatus according to claim 4, wherein a length of the guide recess is equal to or greater than 1/2 of a length of the central portion.

7. The cylindrical battery fixing apparatus according to claim 1, wherein
when the fixing units are coupled so as to engage with each other,
the fixing jaws of the three fixing units form a circle.

8. The cylindrical battery fixing apparatus according to claim 1, comprising a synchronization unit configured to enable the three fixing units to move simultaneously by the same displacement when the three fixing units move along an upper surface of the lower housing in a direction toward a center of the lower housing or in a direction away from the center of the lower housing.

9. The cylindrical battery fixing apparatus according to claim 1, wherein the cylindrical battery is located through the through-hole of the lower housing such that a part of the cylindrical battery protrudes upwardly of the lower housing.

10. The cylindrical battery fixing apparatus according to claim 1, wherein
the guide recesses are provided in the lower end of the upper housing at 90 degree or 75 degree intervals, and
the fixing units are provided in four or five.
